# EUROPEAN PATENT APPLICATION

(11) **EP 4 717 499 A1**
(43) Date of publication of application: **01.04.2026**
(21) Application number: 24306585.1
(22) Date of filing: 27.09.2024
(51) Int. Cl.: B60L 1/04, B60L 1/06, B60L 1/08, B60L 15/00, B60L 50/53, H02M 3/00, H02M 3/02, H02M 5/00

(54) **MEDIUM FREQUENCY AUXILIARY CONVERTER AND ASSOCIATED RAILWAY VEHICLE**

(71) Applicant: ALSTOM Holdings, 93400 Saint-Ouen-sur-Seine (FR)
(72) Inventor: MASSELUS, Jean-Emmanuel, B-6032 MONT-SUR-MARCHIENNE (BE); DUVIVIER, Patrick, 5081 MEUX (BE); DION, Romain, B-6181 COURCELLES (BE)
(74) Representative: Plasseraud IP

(57) **Abstract**

A medium frequency auxiliary converter (1) for a railway vehicle (100) comprises: a bi-directional chopper (11) connected through a high voltage network (0), to a traction converter (25); a single-phase inverter (12) comprising an input (7) and an output (8); a transformer (13) connected to the output (8), comprising a supply output (16); a medium-voltage rectifying and inverting stage (14) connected to the supply output and to medium voltage loads (3) via a medium voltage electrical network (4); and a shore supply connector (24) for connection to an external power supply. The auxiliary converter can to function in a normal mode, to supply DC voltage from the high voltage electrical network (0) to the medium voltage loads (3); and in a shore supply mode, to supply DC high voltage to the high voltage network (0), the shore supply connector being connected to an external power source to receive voltage.

## Description

The present invention relates to a medium frequency auxiliary converter and to an associated railway vehicle.

In current train auxiliary supply architectures, the auxiliary AC electrical power is supplied by at least one auxiliary converter to three-phase loads through a three-phase train line (typically 400 Vac). The auxiliary converter is fed by high voltage DC coming for example from a DC line (catenary or third rail), the output of a traction line converter, or by a high voltage battery in case of autonomous, hybrid or bi-mode trains fed by alternative sources like diesel, H2 fuel cell or batteries. High voltage batteries are batteries with many sets of parallel cells in series stacked to produce a battery pack with voltages reaching up to 1000V or more. The auxiliary converter also generally includes a low voltage DC power supply (typically 110 Vdc, 24Vdc or 72Vdc) supplying low voltage loads via a low voltage network backed-up by a low voltage battery. Because this low voltage power supply is also able to charge the low voltage battery, this low voltage power supply is sometimes named a battery charger. Some trains are equipped with a three-phase shore supply interface, in order typically to be able to do maintenance operations when the train is parked in depot, by supplying some of the three-phase loads and charging the low voltage battery from a shore supply in the depot without need of a high voltage line.

In the case of trains equipped with a pneumatic pantograph, a main compressor for instance is used to produce the compressed air necessary for lifting/lowering the pantograph. The pantograph thus enters in contact with the catenary, which provides the high voltage to the train traction system and to the train auxiliary supply architecture. In the case of trains equipped only with alternative sources like H2 fuel cells or high voltage battery, the high voltage battery provides the high voltage to the train traction system and to the train auxiliary supply architecture.

However, for some maintenance operations performed when the train is in the depot, like reprofiling wheels of the train, it is necessary to move the train inside the depot. This is typically done by either high voltage or by a railway diesel shunter locomotive. This has the drawback that high voltage needs additional infrastructure in the depot and the diesel shunter has a high cost. In addition to this, the operations of coupling or consignment due to high voltage take some time.

For trains equipped only with alternative sources like H2 fuel cells or high voltage battery, there is a need to recharge the high voltage battery. This necessitates the use of a dedicated high voltage battery charger. The dedicated high voltage battery charger can either be integrated in the train itself or take the form of an additional system which is located on shore and used to convert a voltage source (typically 400 Vac), available from the shore, for providing the necessary current for charging the high voltage battery of the train.

However these two charging solutions are not satisfactory. Indeed, in the case the high voltage battery charger is part of in the train itself, additional weight overloads the train for the sole purpose of charging the high voltage battery. In the case of a shore high voltage battery charger, it is necessary to have such a charger available on shore, which is not always possible. For H2 fuel cell based trains, the high voltage battery charge necessitates to use the fuel cell. This solution is not satisfactory because the efficiency of the fuel cell is far below the efficiency of an electric battery charger.

On the other side, as explained above, the conventional auxiliary converter can be used for charging the low voltage loads. This is accomplished either by draining current from the high voltage battery or the power line in contact with the pantograph, or by draining current from the three-phase shore supply. In some cases, the auxiliary converter can also drain some power from the low voltage loads to power some medium voltage auxiliary loads of an auxiliary electrical network of the train.

EP3007924 discloses a medium frequency auxiliary converter for providing power to auxiliary loads of an auxiliary electrical network of a railway vehicle. The auxiliary converter comprises a three-phase output with a three-phase shore supply connection. This auxiliary converter comprises several stages of power conversion at medium frequency in order to provide galvanic insulation between high voltage and medium voltage, high voltage and low voltage and also between medium voltage and low voltage. The auxiliary converter also comprises a reversible low voltage charger stage, connected to the charging output and adapted to supply, when the auxiliary converter is supplied by high voltage, low voltage loads of the railway vehicle. In addition, the reversible low voltage charger stage is adapted to deliver, in a low voltage loads operating mode, a three-phase supply voltage when it is supplied by the low voltage battery. However, it is unable to provide a high voltage at its input when supplied by its shore supply connection.

EP2020726 discloses an auxiliary converter for providing power to auxiliary loads of an auxiliary electrical network of a railway vehicle. The auxiliary converter comprises a main inverter stage with a main inverter input and a main inverter output; a transformer stage connected to the main inverter output. The transformer stage is adapted to convert, in a high-power operating (i.e. normal) mode, the AC voltage from the main inverter stage. The auxiliary converter also comprises a reversible low voltage charger stage connected to low voltage loads and to a low voltage battery, and adapted to supply, in the high-power operating mode, the low voltage loads of the railway vehicle and charge the low voltage battery. In addition, the reversible low voltage charger stage is adapted to deliver, in a low voltage loads operating mode, a supply voltage from the low voltage battery to the transformer stage for powering medium voltage auxiliary loads.

However, as this auxiliary converter functions with a low frequency transformer (typically 50 Hz) at its output, it is heavier, less compact and has a lower efficiency than the converter described by the EP3007924.

Therefore, it is an object of the present invention to enable efficient high voltage battery charging in a compact manner, while improving operability and facilitating maintenance of the railway vehicle.

To this end, the invention relates to a medium frequency auxiliary converter for a railway vehicle, the auxiliary converter comprising:
- a bi-directional chopper configured to be connected through a high voltage network, to at least one traction converter;
- a single-phase inverter comprising an input and an output;
- a transformer connected to the output, the transformer comprising a supply output;
- a medium-voltage rectifying and inverting stage connected to the supply output, configured to be connected to medium voltage loads via a medium voltage electrical network; and
- a shore supply connector for connection to an external power supply,
wherein the auxiliary converter is configured to function in:
- a normal mode to supply DC voltage from the high voltage electrical network to the medium voltage loads, wherein the chopper generates a DC voltage at its output from a DC voltage received at its input from the high voltage network, the single-phase inverter receives DC voltage from the chopper at its input and generates an AC voltage at its output, the transformer converts the AC voltage from the single-phase inverter stage to supply the medium voltage rectifying and inverting stage to provide voltage to the medium voltage loads via the medium voltage electrical network, and
- a shore supply mode, to supply DC high voltage to the high voltage network, wherein the shore supply connector is connected to an external power source, the single-phase inverter converts voltage received from the shore supply connector via the transformer and the medium voltage rectifying and inverting stage into a DC voltage at its input, the chopper generates a high DC voltage at its input, from the DC voltage received at its output from the single-phase inverter and supplies the high voltage network in high voltage to supply the traction converter.

The present invention reduces costs by eliminating the need for an additional and dedicated high voltage battery charger, whether it is external or internal. The present invention allows increased operability by allowing the railway vehicle to be moved with a conventional 400 Vac three-phase available on shore. The present invention allows increased maintainability by allowing the wheel profiling to be performed with no need of additional equipment for making the wheels turn during the reprofiling operations.

According to further advantageous aspects of the invention, the auxiliary converter comprises one or more of the following features, taken alone or in any technically possible combination:
- The auxiliary converter further comprises a low voltage active rectifier stage, connected to a charging output of the transformer, the low voltage active rectifier stage being configured to be connected to low voltage loads and to a low voltage battery, and in the shore supply mode, the auxiliary converter further supplies low voltage to the low voltage loads by supplying the low voltage active rectifier stage in AC voltage by the transformer, the low voltage active rectifier stage converting the AC voltage from the transformer in low voltage and supplying the low voltage loads in low voltage.
- The chopper comprises four transistors with diodes connected in parallel of each transistor.
- The medium voltage rectifying and inverting stage comprises at least one of a single-phase rectifier, a DC-link capacitor and a three-phase inverter.
- The transformer is a medium frequency transformer operating at a frequency between 3 kHz and 100 kHz.
- The transformer is a single-phase transformer.
- Said transformer has a total of two primary windings, one secondary winding and one tertiary winding, and the low voltage active rectifier stage comprises an active low voltage rectifier, connected to the tertiary winding.
- The auxiliary converter comprises multiple single-phase inverters.
- The single-phase inverter comprises four transistors, with diodes connected in parallel of each transistor.

The invention further relates to a railway vehicle, comprising:
- a high voltage network comprising a traction converter connected to the auxiliary converter of any one of the previous claims;
- medium voltage loads;
- an auxiliary network;
- a power supply connector; and
- the auxiliary converter described hereabove, wherein the auxiliary converter is connected between the high voltage network and the medium voltage loads via the auxiliary electrical network.

The invention will be better understood when reading the following description, which is given solely by way of example and with reference to the appended drawings, in which:
Figure 1 is a block diagram indicating a functional configuration example of a railway vehicle including an auxiliary converter according to the invention,
Figure 2 is a circuit diagram of the auxiliary converter of Fig. 1.

In the entire disclosure, DC stands for direct current and AC stands for alternative current. When saying DC voltage, it is meant that the voltage is direct, so DC voltage is equivalent to direct voltage, and when saying AC voltage, it is the voltage that is alternative, so AC voltage is equivalent to alternative voltage.

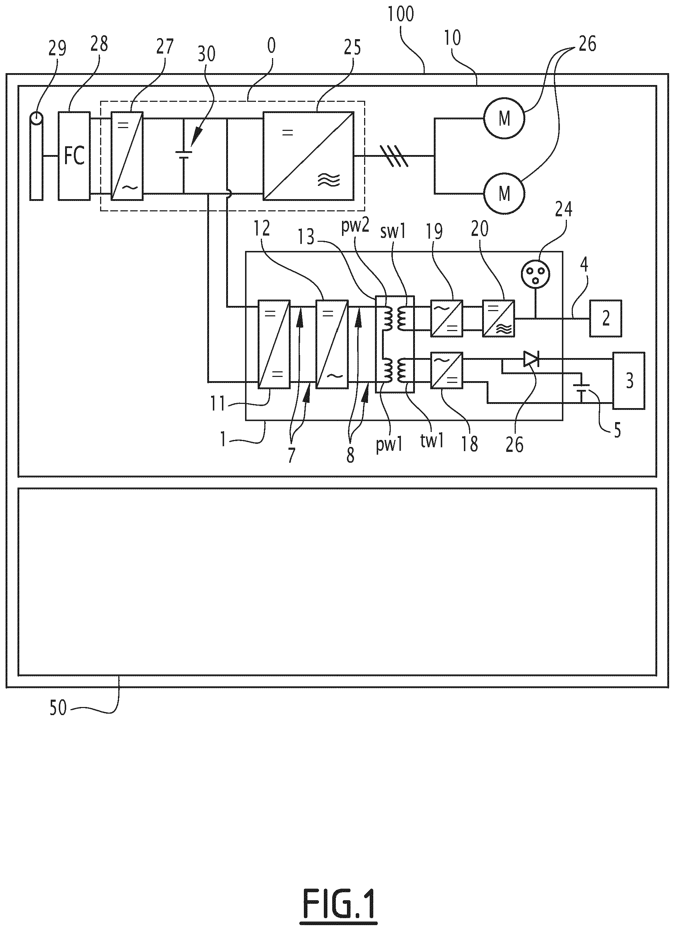

Figure 1 shows a typical fuel cell based autonomous railway vehicle 100 comprising a set 10 formed of a green energy supply system with its associated traction and auxiliary systems. Advantageously, for availability reasons, the set 10 is redundant, and the railway vehicle 100 comprises a second set 50, similar in function to the set 10.

The set 10 of green energy supply system with its associated traction and auxiliary systems include a fuel cell 28, connected to a hydrogen tank 29, and to a DC/DC converter 27, connected to the fuel cell 28 and optionally, a battery 30. The set 10 further comprises a traction converter 25, connected between the high voltage battery 30 and traction motors 26.

The DC/DC converter 27 is configured to convert the fuel cell output voltage, which varies typically in a range of 200V to 400V, to a voltage suitable for the traction converter 25.

Advantageously the DC/DC converter 27 is further configured to convert the fuel cell output voltage to a voltage suitable for a rechargeable device 30 such as a high voltage battery, connected to an output of the DC/DC converter 27. The voltage suitable for the battery 30 typically varies from 700V to 1000V.

The traction converter 25 is configured to convert direct current produced by the high voltage battery 30, or directly by the fuel cell 28 and converted by the DC/DC converter 27, in three-phase alternative current to supply the traction motors 26. The DC/DC converter 27, the high voltage battery 30, the traction converter 25 are connected together and form a high voltage electrical network 0. In other words, the high voltage electrical network 0 comprises the DC/DC converter 27, the high voltage battery 30 and the traction converter 25, connected together.

The set 10 further comprises a medium frequency auxiliary converter 1, also called auxiliary converter. The auxiliary converter 1 comprises a high voltage input, a three-phase output and a direct current output. The auxiliary converter 1 is connected at its high voltage input to the high voltage battery 30, more precisely to the high voltage electrical network 0. It is further connected to medium voltage loads 2, at its three-phase output, via a medium voltage electrical network 4, and to low voltage loads 3 such as control electronics, emergency lighting, etc., at its direct current output. A low voltage battery 5 is also connected to the direct current output of the auxiliary converter 1. Advantageously, the low voltage battery 5 serves as back-up power source for the low voltage loads 3.

The high voltage electrical network 0 is connected to the high voltage input of the auxiliary converter 1. The auxiliary converter 1 is configured to supply and/or receive power through the high voltage electrical network 0.

As a variant, equipment connected to the high voltage input of the auxiliary converter 1 may also comprise an energy storage system including a DC/DC converter connected to a high voltage battery. Other equipment including different traction converters or traction systems may also be connected to the high voltage input of the auxiliary converter 1.

The auxiliary converter 1 comprises a chopper 11, which is bi-directional. The high voltage input of the auxiliary converter 1 corresponds to the input of the chopper 11. Thus, the chopper 11 is connected through the high voltage network 0 to the traction converter 25 and advantageously, to the battery 30.

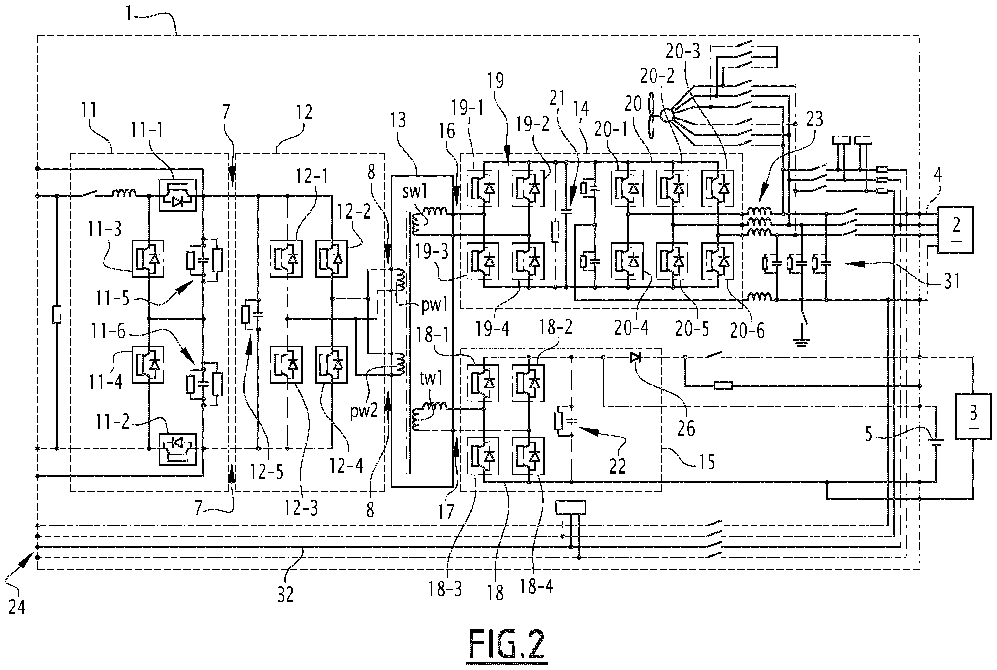

The chopper 11 comprises four transistors 11-1, 11-2, 11-3 and 11-4, visible in figure 2, with diodes connected in parallel of each transistor. The chopper 11 further comprises and two capacitors 11-5 and 11-6, connected in series to each other. In the example of figure 2, the transistors 11-1, 11-2, 11-3, 11-4 are insulated-gate bipolar transistors (IGBT), but in variant, they are metal-oxide semiconductor field-effect transistors, or MOSFETs. Control electronics of the auxiliary converter 1, not represented, are also implemented to control the four transistors 11-1, 11-2, 11-3 and 11-4. Each of these transistors 11-1, 11-2, 11-3 and 11-4 is configured to switch from an off state to an on state and vice versa, in response to a command received on its gate. To this end, the gates of each of these transistors 11-1, 11-2, 11-3 and 11-4 are connected to gate drivers that receive their orders by the control electronics of the auxiliary converter 1 which are configured to control the transistors in a three level step-up chopper mode. The transistors 11-1 and 11-2 allow the chopper 11 to be bi-directional.

The auxiliary converter 1 further comprises a single-phase inverter 12, which includes an input 7 and an output 8. The single-phase inverter 12 is a medium frequency, high voltage, single-phase inverter, and is adapted to generate an AC voltage at its output 8 from DC voltage received at its input 7 from the bi-directional chopper 11. The single-phase inverter 12 is also adapted to generate a DC voltage at its input 7 from AC voltage received at its output 8, and is thus, bidirectional.

The single-phase inverter 12 comprises four transistors 12-1, 12-2, 12-3, 12-4, visible in figure 2, with diodes connected in parallel of each transistor. The transistors 12-1 and 12-3 belong to one branch of the single-phase inverter 12, and the transistors 12-2 and 12-4 belong to another branch of the single-phase inverter 12, both branches being connected in parallel to each other. In the example of figure 2, the transistors 12-1, 12-2, 12-3, 12-4 are IGBTs, but in variant, the transistors 12-1, 12-2, 12-3, 12-4 are MOSFETs. The single-phase inverter 12 further comprises a capacitor 12-5, connected in parallel of the branches. The control electronics of the auxiliary converter 1 are further configured to control the four transistors 12-1, 12-2, 12-3, 12-4 of the single-phase inverter 12.

In a non-represented variant, the single-phase inverter 12 comprises a half-bridge with two semi-conductors, or a plurality of bridges.

In a non-represented variant, the auxiliary converter 1 comprises multiple single-phase inverters. Advantageously, the multiple single-phase inverters are connected to each other.

The auxiliary converter 1 further comprises a transformer 13, connected to the output 8 of the single-phase inverter 12. The transformer 13 is a medium frequency transformer, in particular a transformer operating at a frequency of a few kHz, for example 3 kHz, to 100 kHz. Using a medium frequency transformer helps reducing the size and the weight of the auxiliary converter 1. Furthermore, advantageously, the transformer 13 is a single-phase transformer. As shown in figures 1 and 2, the transformer 13 comprises two primary windings pw1 and pw2, one secondary winding sw1 and a tertiary winding tw1. The transformer 13 further comprises a supply output 16, connected to a medium voltage rectifying and inverting stage 14 and a separate charging output 17 connected to a low voltage active rectifier stage 15. In variant, the transformer 13 comprises a plurality of supply outputs 16. In particular, the supply output 16 connects the secondary winding sw1 to the medium voltage rectifying and inverting stage 14 and the separate charging output 17 connects the tertiary winding tw1 to the low voltage active rectifier stage 15.

The medium voltage rectifying and inverting stage 14 comprises advantageously at least one of an active rectifier 19, a three-phase inverter 20 and a DC-link capacitor 21. In the example of figure 2, the medium voltage rectifying and inverting stage 14 comprises all three. The active rectifier 19 is a medium voltage, single-phase, active rectifier. The active rectifier 19 is connected to the secondary winding sw1 via the supply output 16. The active rectifier 19 comprises four transistors 19-1, 19-2, 19-3, 19-4 and a diode is connected in parallel of each transistor. The transistors 19-1 and 19-3 belong to one branch of the active rectifier 19, and the transistors 19-2 and 19-4 belong to another branch of the active rectifier 19, both branches being connected in parallel to each other. In the example of figure 2, the transistors 19-1, 19-2, 19-3, 19-4 are IGBTs, but in variant, the transistors 19-1, 19-2, 19-3, 19-4 are MOSFETs.

The DC-link capacitor 21 is advantageously connected to the medium voltage active rectifier 19, for example in parallel to the branches of the active rectifier 19.

The three-phase inverter 20 is connected to the active rectifier 19. The three-phase inverter 20 comprises six transistors 20-1, 20-2, 20-3, 20-4, 20-5 and 20-6, which are controlled by the control electronics of the auxiliary converter 1 via pulse width modulation, or PWM. The transistors 20-1 and 20-4 form a first branch, the transistors 20-2 and 20-5 form a second branch and the transistors 20-3 and 20-6 form a third branch of the three-phase inverter 20. The three branches are connected in parallel to one another, and a coil 23 and an output filter capacitor 31 is connected to a middle point of each branch, in other words between the transistors forming each branch.

The low voltage active rectifier stage 15 comprises an active rectifier 18, which is a low voltage active rectifier. The active rectifier 18 is connected to the tertiary winding tw1 via the charging output 17. The active rectifier 18 comprises four transistors 18-1, 18-2, 18-3 and 18-4, and a diode is connected in parallel of each transistor. The transistors 18-1 and 18-3 belong to one branch of the active rectifier 18, and the transistors 18-2 and 18-4 belong to another branch of the active rectifier 18, both branches being connected in parallel to each other. In the example of figure 2, the transistors 18-1, 18-2, 18-3, 18-4 are IGBTs, but in variant, the transistors 18-1, 18-2, 18-3, 18-4 are MOSFETs.

The control electronics of the auxiliary converter 1 are further configured to control the four transistors 12-1, 12-2, 12-3, 12-4 of the single phase high voltage inverter 12,the transistors 19-1,19-2, 19-3, 19-4 of the medium voltage active rectifier 19 and the transistors 18-1, 18-2, 18-3 and 18-4 of the low voltage active rectifier 18 as "dual" active bridges in phase-shift.

The low voltage active rectifier stage 15 advantageously also comprises a DC-link capacitor 22, connected to the low voltage active rectifier 19, in parallel to the branches of the low voltage active rectifier 19.

The low voltage active rectifier stage 15 advantageously also comprises a diode 26, connected to the low voltage active rectifier 18, and the low voltage battery 5 is connected between the low voltage active rectifier 18 and the diode 26.

The auxiliary converter 1 further comprises a shore supply connector 24. The shore supply connector 24 is connected between the three filter output capacitors 31 and the three-phase output of the auxiliary converter 1 via a three-phase power supply line 32. The shore supply connector 24 is configured to be connected to an external power supply, advantageously a three-phased external power supply, also called external power source and not represented, when the railway vehicle 100 is, for example, in a depot.

Next, the operation of the auxiliary converter 1 will be described.

The auxiliary converter 1 is configured to operate in a normal mode, a shore supply mode and, advantageously, an emergency mode.

In normal node, the high voltage network 0, via the high voltage battery 30 or the fuel cell 28, supplies the traction converter 25 in order to move the railway vehicle 100 or to rotate wheels of the railway vehicle to perform maintenance operations, such as reprofiling. In addition to this, in normal mode, the high voltage network 0 supplies voltage to the auxiliary converter 1 to supply the medium voltage loads 2, and advantageously the low voltage loads 3 and the low voltage battery 5.

To do so, the chopper 11 receives the DC high voltage from the high voltage network 0 and adapts it in DC voltage suitable for the inverter 12, which is received by the inverter 12 at its input 7. The inverter 12 then converts the DC voltage received into an AC voltage at its output 8, in the example of figures 1 and 2, into a single-phase AC voltage. The transformer 13 then supplies the medium voltage rectifying and inverting stage 14 to provide voltage to the medium voltage loads 2 via the medium voltage electrical network 4. In the example of figure 2, the transformer 13 supplies the medium voltage active rectifier 19 with AC voltage, via its secondary winding sw1 and supply output 16. The transformer 12 further supplies the low voltage active rectifier 18 with AC voltage, via its tertiary winding tw1 and charging output 17.

The medium voltage active rectifier 19 converts the AC voltage into DC voltage. Therefore, the high voltage inverter 12, the transformer 13 and the single-phase active rectifier 19 of the medium voltage rectifying and inverting stage 14 act as a galvanically isolated medium frequency DC/DC converter as a whole. The DC voltage provided by the medium voltage active rectifier 19 is then converted by the inverter 20 into three-phase medium AC voltage, for example 400Vac with a frequency equal to 50Hz. The three-phase medium AC voltage is then filtered by the output filter capacitors 31, output at the three-phase output of the auxiliary converter 1 and supplies the medium voltage loads 2 via the medium voltage electrical network 4. In normal mode, the medium voltage electrical network 4 is supplied only by the auxiliary converter 1, so the output voltage of the auxiliary converter 1 is not synchronised with another three-phase power supply.

The low voltage active rectifier 18 converts the AC voltage into low DC voltage, for example equal to 110Vdc, 72Vdc, 36Vdc or 24Vdc, to supply the battery 5, thus charging the battery 5, and to supply the low voltage loads 3.

In the shore supply mode, voltage from the external power source is applied to the three-phase output of the auxiliary converter 1. This is typically done by connecting the shore supply connector 24 to the external power source. In this case, the external power source supplies the medium voltage loads 2. The external power source also supplies high voltage to the high voltage network 0, more precisely to the traction converter 25 and the battery 30 via the auxiliary converter 1. Advantageously the external power source also supplies the low voltage loads 3 and charges the low voltage battery 5.

This is done by supplying the medium voltage rectifying and inverting stage 14, more precisely, the inverter 20. In the shore supply mode, the inverter 20 converts the three-phase AC voltage received from the external power source, in DC voltage. In shore supply mode, the voltage received by the inverter 20, which is for example 400Vac/50Hz, is synchronized on the external power source. The inverter 20 thus acts as an active three-phase rectifier. The active rectifier 19 then receives the DC voltage from the inverter 20 and converts it into AC voltage. Thus, in shore supply mode, the active rectifier 19 acts as an inverter. The AC voltage is then received on the output 16 of the transformer 13, which supplies the single-phase inverter 12 and, advantageously, the low voltage active rectifier stage 15, in the example of figures 1 and 2, the low voltage active rectifier 18. The low voltage active-rectifier 18 then advantageously converts the AC voltage in low voltage, in the example, in low DC voltage, and then supplies the low voltage battery 5 and the low voltage loads 3 connected to the direct current output of the auxiliary converter 1.

The single-phase inverter 12 converts the AC voltage from its output 8 into DC voltage at its input 7, and supplies the chopper 11. The chopper 11, more precisely the transistors 11-1 to 11-4 of the chopper 11 are then controlled by the control electronics to convert the DC voltage received at the output of the chopper 11 into a high DC voltage at its input, for example 750 Vdc. The high DC voltage is then supplied to the high voltage network 0, to charge the high voltage battery 30 and/or to supply the traction converter 25. Supplying the traction converter 25 advantageously allows to supply the motors 26 to perform maintenance operations such as wheel reprofiling, or to move the railway vehicle 100.

The single-phase inverter 12, the transformer 13 and the single-phase active rectifier 19 of the medium voltage rectifying and inverting stage 14 act as galvanically insulated DC/DC converter stage as a whole, and produce DC voltage at the high voltage input of the auxiliary converter 1.

Charging of the high voltage battery 30, supplying the traction converter 25 and/or supplying the low voltage loads 3 and charging the low voltage battery 5 is performed only if necessary and each of these operations can be done independently of each other.

The shore supply mode is advantageously used when the railway vehicle 100 is in depot, and it is preferable to supply it via a three-phase external supply, available in the depot, to optimise its consumption.

In emergency mode, the low voltage battery 5 is used to charge the high voltage battery 30 and/or supply the medium voltage loads 2. The low voltage battery may also supply the low voltage loads 3. In the emergency mode, the low voltage battery 5 supplies the active low voltage rectifier 18 with low, DC voltage, for example 110Vdc, which converts it into AC voltage. The active low voltage rectifier 18 thus acts as an inverter generating AC voltage when the auxiliary converter 1 is supplied by the low voltage battery 5. The active low voltage rectifier 18 then supplies the transformer 13 in AC voltage via its charging output 17. The single-phase inverter 12 is supplied in AC voltage at its output 8 via the transformer 13, and converts the AC voltage at its output 8 into DC voltage at its input 7. The chopper 11 converts the received DC voltage into a high voltage DC voltage, to supply the high voltage battery 30 and/or the traction converter 25.

Advantageously, the active medium voltage rectifier 19 is also supplied by the transformer 13, and converts the AC voltage received into DC voltage, which is then converted into three-phase medium voltage by the inverter 20 to supply the medium voltage loads 2.

Similarly as in the shore-supply mode, charging of the high voltage battery 30 supplying the traction converter 25, supplying the medium voltage loads 2 and supplying the low voltage loads 3 is performed only if necessary and each of these operations can be done independently of each other.

The mode in which the auxiliary converter 1 functions and which of the high voltage battery 30, the traction converter 25, the medium voltage loads 2, the low voltage loads 3 and the low voltage battery 5 are supplied, or used as a power supply in the case of the batteries 30 and 5, is controlled by the control electronics of the auxiliary controller 1. Similarly, the control electronics control the transistors of the chopper 11, the single-phase inverter 12, the active rectifiers 18 and 19 and the three-phase inverter 20 depending on the mode in which the auxiliary converter 1 functions.

The auxiliary converter 1 functions in emergency mode preferably for short time-periods, as the low voltage battery 5 will be depleted quickly.

In variant, not represented, the second set 50 comprises an auxiliary converter, similar to the auxiliary converter 1. In this case the auxiliary converter of the second set 50 comprises a three-phase inverter similar to the three-phase inverter 20, and advantageously, the outputs of the three-phase converter of each set 10, 50 are connected together.

In variant, the second set 50 comprises an active rectifier similar to the active rectifier 18, and the first set 10 and the second set 50 are both connected to the same low voltage battery 5, via their active rectifiers.

In summary, it is possible to supply the equipment connected to the high voltage input of the auxiliary converter 1 such as the traction converter 25 to move the train or rotate the wheels when reprofiling, and/or the high voltage battery 30 in order to charge it, while supplying the medium voltage and low voltage loads 2 and 3 by supplying the railway vehicle 100 from the external power source. As the auxiliary converter 1 is a medium frequency converter, its volume and weight are also reduced. This auxiliary converter 1 reduces the costs by eliminating the need for an additional dedicated hardware like a high voltage battery charger, and makes maintenance operations easier, as a dedicated diesel truck to move the train and reprofiling rubber wheel tools are not necessary anymore.

## Claims

1. A medium frequency auxiliary converter (1) for a railway vehicle (100), the auxiliary converter (1) comprising:
- a bi-directional chopper (11) configured to be connected through a high voltage network (0), to at least one traction converter (25);
- a single-phase inverter (12) comprising an input (7) and an output (8);
- a transformer (13) connected to the output (8), the transformer (13) comprising a supply output (16);
- a medium-voltage rectifying and inverting stage (14) connected to the supply output (16), configured to be connected to medium voltage loads (3) via a medium voltage electrical network (4); and
- a shore supply connector (24) for connection to an external power supply,
wherein the auxiliary converter (1) is configured to function in:
- a normal mode, to supply DC voltage from the high voltage electrical network (0) to the medium voltage loads (2), wherein the chopper (11) generates a DC voltage at its output (7) from a DC voltage received at its input from the high voltage network (0), the single-phase inverter (12) receives DC voltage from the chopper (11) at its input (7) and generates an AC voltage at its output (8), the transformer (13) converts the AC voltage from the single-phase inverter stage (12) to supply the medium voltage rectifying and inverting stage (14) to provide voltage to the medium voltage loads (2) via the medium voltage electrical network (4), and
- a shore supply mode, to supply DC high voltage to the high voltage network (0), wherein the shore supply connector (24) is connected to an external power source, the single-phase inverter (12) converts voltage received from the shore supply connector (24) via the transformer (13) and the medium voltage rectifying and inverting stage (14) into a DC voltage at its input (7), the chopper (11) generates a high DC voltage at its input, from the DC voltage received at its output (7) from the single-phase inverter (12) and supplies the high voltage network (0) in high voltage to supply the traction converter (25).

2. The auxiliary converter (1) of claim 1, further comprising a low voltage active rectifier stage (15), connected to a charging output (17) of the transformer (13), the low voltage active rectifier stage (15) being configured to be connected to low voltage loads (3) and to a low voltage battery (5), and in the shore supply mode, the auxiliary converter (1) further supplies low voltage to the low voltage loads (3) by supplying the low voltage active rectifier stage (15) in AC voltage by the transformer (13), the low voltage active rectifier stage (15) converting the AC voltage from the transformer (13) in low voltage and supplying the low voltage loads (3) in low voltage.

3. The auxiliary converter (1) of claims 1 or 2, wherein the chopper (11) comprises four transistors (11-1, 11-2, 11-3, 211-4) with diodes connected in parallel of each transistor (11-1, 11-2, 11-3, 11-4).

4. The auxiliary converter (1) of any one of the previous claims, wherein the medium voltage rectifying and inverting stage (14) comprises at least one of a single-phase rectifier (19), a DC-link capacitor (21) and a three-phase inverter (20).

5. The auxiliary converter (1) of any one of the previous claims, wherein the transformer (13) is a medium frequency transformer operating at a frequency between 3 kHz and 100 kHz.

6. The auxiliary converter (1) of any one of the previous claims, wherein the transformer (13) is a single-phase transformer.

7. The auxiliary converter (1) of any one of the previous claims, wherein said transformer (13) has a total of two primary windings (pw1, pw2), one secondary winding (sw1) and one tertiary winding (tw1), and the low voltage active rectifier stage (15) comprises an active low voltage rectifier (18), connected to the tertiary winding (tw1).

8. The auxiliary converter (1) of any one of the previous claims, comprising multiple single-phase inverters (12).

9. The auxiliary converter (1) of claim 8, wherein the single-phase inverter (12) comprises four transistors (12-1, 12-2, 12-3, 12-4), with diodes connected in parallel of each transistor (12-1, 12-2, 12-3, 12-4).

10. A railway vehicle (10) comprising:
- a high voltage network (0) comprising a traction converter (25) connected to the auxiliary converter (1) of any one of the previous claims;
- medium voltage loads (2);
- an auxiliary network (4);
- a power supply connector (24); and
- the auxiliary converter (1) of any one of the previous claims, wherein the auxiliary converter (1) is connected between the high voltage network (0) and the medium voltage loads (2) via the auxiliary electrical network (4).
